# EUROPÄISCHE PATENTSCHRIFT

(11) **EP 2 252 484 B1**
(45) Veröffentlichungstag und Bekanntmachung des Hinweises auf die Patenterteilung: **23.04.2014**
(21) Anmeldenummer: 09716761.3
(22) Anmeldetag: 23.01.2009
(51) Int. Cl.: B60R 21/017, H02J 9/06

(54) **STEUERGERÄT UND VERFAHREN ZUR ANSTEUERUNG VON PERSONENSCHUTZMITTELN FÜR EIN FAHRZEUG**
CONTROL UNIT AND METHOD FOR CONTROLLING PERSONAL PROTECTION MEANS FOR A VEHICLE
APPAREIL DE COMMANDE ET PROCÉDÉ DE COMMANDE DE MOYENS DE PROTECTION DE PERSONNES POUR UN VÉHICULE AUTOMOBILE

(30) Priorität: 06.03.2008 DE 102008012896
(43) Veröffentlichungstag der Anmeldung: 24.11.2010
(73) Patentinhaber: Robert Bosch GmbH, 70442 Stuttgart (DE)
(72) Erfinder: KARNER, Ruediger, 70806 Kornwestheim (DE); SCHUMACHER, Hartmut, 71691 Freiberg (DE); LIST, Carsten, 71642 Ludwigsburg (DE)
(86) Internationale Anmeldenummer: PCT/EP2009/050750
(87) Internationale Veröffentlichungsnummer: WO 2009/109416

(56) Entgegenhaltungen:
- WO-A-01/81122
- WO-A-2007/003469
- US-A1- 2004 196 615

## Beschreibung

### Stand der Technik

Die Erfindung betrifft ein Steuergerät bzw. ein Verfahren zur Ansteuerung von Personenschutzmitteln für ein Fahrzeug nach der Gattung der unabhängigen Patentansprüche.

Aus DE 10 2004 060 296 A1 ist es bereits bekannt, in einem Steuergerät zur Ansteuerung von Personenschutzmitteln mindestens zwei Halbleiterbausteine zu verwenden, die jeweils einen eigenen Halbleiterträger aufweisen. Die Bausteine decken sich in den Funktionen.

Aus WO 2007/003469 A ist ein Steuergerät für den Personenschutz gemäß Oberbegriff des Anspruchs 1 bekannt, das einen bidirektionalen Schaltwandler und weitere Spannungswandler aufweist. Der Schaltwandler und die Spannungswandler sind verschaltet.

### Offenbarung der Erfindung

Das erfindungsgemäße Steuergerät bzw. das erfindungsgemäße Verfahren zur Ansteuerung von Personenschutzmitteln für ein Fahrzeug mit den Merkmalen der unabhängigen Patentansprüche haben dem gegenüber den Vorteil, dass nunmehr beispielsweise bei einer großen Anzahl von Zündkreisen mehrere Halbleiterbausteine mit ähnlichen oder gleichen Funktionen, wie dem Bereitstellen von Versorgungsspannungen, vorliegen und diese in Abhängigkeit von der Überwachung dieser Versorgungsspannung eine gemeinsame Reset-Funktion für das Steuergerät ausführen. Haben nämlich alle Versorgungsspannungen Werte innerhalb eines vorgegebenen Bereichs erreicht, wird der Reset freigegeben und das Steuergerät kann nun korrekt mit diesen Versorgungsspannungen arbeiten. Erfindungsgemäß ist dabei vorgesehen, dass sich die wenigstens zwei Halbleiterbausteine gegenseitig bezüglich der Versorgungsspannungen überwachen. Dies bedeutet, dass zumindest ein Teil der Bereitstellung der Versorgungsspannungen durch den anderen Halbleiterbaustein überwacht wird. Damit wird bei einem solchen verteilten Versorgungssystem eine robuste Spannungsüberwachung und Reset-Erzeugung garantiert. Dies wird vorliegend durch eine kaskadierte Verschaltung der selbstüberwachten Versorgungsspannung zwischen den verschiedenen Halbleiterbausteinen erreicht. Damit ist keine Einzelüberwachung für Halbleiterbausteine, beispielsweise durch einen Mikrocontroller, notwendig.

Ein Steuergerät ist vorliegend ein elektrisches Gerät, das Sensorsignale auswertet und in Abhängigkeit davon die Personenschutzmittel wie Airbags, Gurtstraffer oder eine Fahrdynamikregelung oder Bremsen ansteuert. Ansteuern bedeutet dabei ein Aktivieren dieser Personenschutzmittel.

Unter den Halbleiterbausteinen sind integrierte Schaltkreise zu verstehen, die ein eigenes Halbleitersubstrat aufweisen. Die wenigstens zwei Halbleiterbausteine können dabei in einem gemeinsamen Gehäuse angeordnet sein.

Unter den Versorgungsspannungen sind vorwiegend die Spannungen zu verstehen, die das Steuergerät für den Betrieb benötigt. Dies sind beispielsweise stabilisierte Kleinspannungen von 5 und 3,3 Volt. Diese dienen sowohl zur Eigenversorgung der Halbleiterbausteine als auch zur Versorgung der weiteren Komponenten des Steuergerät.

Die Überwachungsfunktion prüft die vorhandenen Versorgungsspannungen bzw. erzeugte Spannungen, aus denen letztlich die Versorgungsspannungen abgeleitet werden, auf den Wertebereich, in dem sie liegen. Liegen die Versorgungsspannungen innerhalb eines vorgegebenen Bereichs, dann wird auf eine Funktionsfähigkeit des jeweiligen Halbleiterbausteins bezüglich der Bereitstellung solcher Versorgungsspannungen geschlossen. Die Überwachungsfunktion kann beispielsweise durch Komparatoren hard- und/oder softwaremäßig ausgeführt sein. Zusätzlich sind die vorliegenden Halbleiterbausteine bezüglich dieser Überwachung kaskadiert verschaltet. Das heißt, die Halbleiterbausteine erfassen wenigstens einen Parameter (beispielsweise eine Regler-Ausgangsspannung) des anderen Halbleiterbausteins bezüglich der Erzeugung der Versorgungsspannungen. Die Überwachung erfolgt dabei gegenseitig.

Unter einer Reset-Funktion ist vorliegend das Erzeugen eines Reset-Signals für die Bausteine im Steuergerät zu verstehen. Wie oben dargestellt, wird dieses Reset dann freigegeben (beispielweise ein High-Pegel), wenn die Versorgungsspannungen innerhalb der vorgegebenen Parameter sind und danach bei Betriebsstörungen beziehungsweise nach Abschaltung des Geräts aktivert (beispielsweise Low-Pegel). Das Reset bewirkt einen Zustand der Bausteine, der vordefiniert ist. Die Reset-Funktion wird aktiviert, wenn die Versorgungsspannungen nicht innerhalb der vorgegebenen Parameter sind.

Reset aktiv bedeutet dabei, dass ein Fehlerzustand beziehungsweise eine fehlende Versorgung erkannt wurde und das Gerät gesperrt wird, d.h. keine Auslösefunktionalität besteht.

Reset freigegeben ist der Normalzustand nach Power On, bei dem alle internen Spannungen im erwarteten Bereich sind und volle Funktionalität des Steuergeräts und seiner Komponenten gegeben ist. Vorliegend ist der Reset lowaktiv, d.h. High-Pegel 3,3V = Reset freigegeben; Low-Pegel = Reset aktiv.

Durch die in den abhängigen Ansprüchen aufgeführten Maßnahmen und Weiterbildungen sind vorteilhafte Verbesserungen des in den unabhängigen Patentansprüchen angegebenen Steuergeräts bzw. Verfahrens zur Ansteuerung von Personenschutzmitteln für ein Fahrzeug möglich.

Es ist dabei vorteilhaft, dass die jeweilige Überwachungsfunktion wenigstens eine Ausgangsspannung des Linearreglers des anderen Halbleiterbausteins überwacht. Es wird dabei auf Einhaltung von definierten Band- (Minimum und Maximum) beziehungsweise einer Minimal-Spannungsgrenze geprüft. Ein Linearregler ist ein notwendiger Baustein für die Erzeugung der Versorgungsspannungen.

Es ist weiterhin vorteilhaft, dass die Reset-Funktion wenigstens eine Stromquelle zur Abgabe von wenigstens zwei Strömen aufweist. Damit können die Aktionen Reset-Aktivieren oder Reset-Freigeben durch unterschiedliche Ströme codiert werden. Die Ströme können sich dabei mindestens um den Faktor 2 unterscheiden, wobei der Strom zur Aktivierung des Resets höher ist als der zweite Strom für Freigabe des Resets. Damit kann bei einer Mehrzahl von Halbleiterbausteinen der Strom zur Aktivierung des Resets eine Fehlentscheidung von anderen Halbleiterbausteinen ggf. unterbinden. Als besonders vorteilhaft hat sich dabei erwiesen, den ersten Strom bei mindestens 2 mA und den zweiten Strom bei maximal 1 mA festzulegen. In einer weiteren Variante hat es sich als vorteilhaft erwiesen, den ersten Strom bei mindestens 4mA festzulegen. Damit wird der Strom zum Aktivieren des Resets als mindestens 2 mA angegeben und der zur Freigabe maximal 1 mA.

Die Bildung des gemeinsamen Resets für das Gesamtsystem aus den Resets der verschiedenen Halbleiterbausteine kann entweder durch eine direkte Zusammenschaltung oder durch eine zusätzliche Auswertelogik (beispielsweise verschiedene Mikrocontroller-Ports) erfolgen.

Liegen beispielsweise drei Halbleiterbausteine vor, deren Resetausgänge direkt verbunden sind, dann müssen zur Freigabe des Gesamt-Resets alle Einzelbausteine ihren Reset freigeben. Anderenfalls sorgt die Ansteuerung einer Reset-aktivierenden Stromquelle in einem Halbleiterbaustein dafür, dass der Gesamtreset aktiviert wird.

Ausführungsbeispiele der Erfindung sind in der Zeichnung dargestellt und werden in der nachfolgenden Beschreibung näher erläutert.

Es zeigen:
Figur 1 ein Blockschaltbild des erfindungsgemäßen Steuergeräts in einem Fahrzeug mit angeschlossenen Komponenten,
Figur 2 ein Schaltbild von 3 zusammen geschalteten Halbleiterbausteinen gemäß der Erfindung und
Figur 3 ein Flussdiagramm des erfindungsgemäßen Verfahrens.

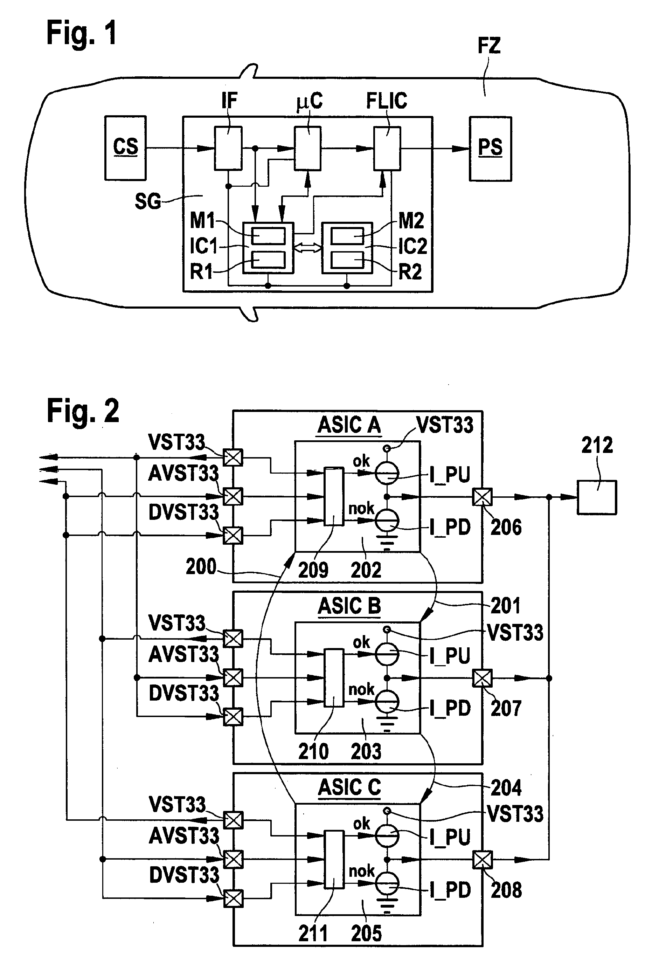

Figur 1 zeigt in einem Blockschaltbild das erfindungsgemäße Steuergerät SG in einem Fahrzeug FZ mit den angeschlossenen Komponenten Crashsensorik CS und den Personenschutzmitteln PS. Vorliegend ist eine vereinfachte Darstellung gewählt, für den wirklichen Betrieb sind noch mehr Komponenten als dargestellt notwendig, aber diese Komponenten wurden der Einfachheit halber weggelassen.

Die Crashsensorik CS ist an eine Schnittstelle IF im Steuergerät SG angeschlossen. Bei der Crashsensorik CS handelt es sich beispielsweise um Beschleunigungs-, Luftdruck-, Körperschall- und Umfeldsensoren. Die Signale werden beispielsweise über einen Bus oder Punkt zu Punkt-Verbindungen zur Schnittstelle IF übertragen. Üblicherweise wird eine Strommodulation verwendet. Viele der Sensoren wie die Beschleunigungs-, Körperschall- und Luftdrucksensoren sind mikromechanisch hergestellt und daher in großen Stückzahlen leicht herstellbar.

Die Schnittstelle IF ist vorliegend als integrierter Schaltkreis ausgebildet. Es ist möglich, sie aus einer Mehrzahl von integrierten Schaltkreisen in Kombination mit diskreten Bauelementen und/oder in Kombination mit Software zu realisieren. Die Schnittstelle I F empfängt die Signale der Crashsensorik CS und formatiert sie für ein das Steuergerät einfaches Protokoll um. Üblicherweise wird der SPI-Bus zur Übertragung dieser Signale verwendet. Die Signale werden von der Schnittstelle IF zum Mikrocontroller µC als die Auswerteschaltung und dem IC1 übertragen. Anstatt eines Mikrocontrollers können auch andere Prozessortypen, ASICs und/oder diskrete Bauelemente verwendet werden. Peripheriekomponenten wie Speicher usw. sind der Einfachheit halber nicht dargestellt. Der Mikrocontroller µC wertet die Sensorsignale mittels geladener Auswertealgorithmen aus und erzeugt in Abhängigkeit von dem Ergebnis dieser Auswertung ein Ansteuersignal. Parallel dazu erhält auch der Halbleiterbaustein IC1 die Sensorsignale. Zur Auswertung dieser Sensorsignale weist auch der IC1 eine Auswerteelektronik auf, die in einfacher Art und Weise die Sensorsignale auswertet und ein entsprechendes Freigabesignal an die Zündkreisschaltung FLIC überträgt.

Der Baustein IC1 führt aber beispielsweise auch Watchdog-Funktionen aus. Weiterhin führt der Halbleiterbaustein IC1 die Bereitstellung der Versorgungsspannung gemäß der Erfindung aus. Dies wird auch von dem weiteren Halbleiterbaustein IC2 so ausgeführt. Die Halbleiterbausteine IC1 und IC2 stellen beispielsweise 3,3 und 5 Volt als die Versorgungsspannungen bereit. Die Halbleiterbausteine IC1 und IC2 weisen weiterhin jeweils Monitorfunktionen M1 und M2 auf, die die erzeugten Versorgungsspannungen auf das Einhalten bestimmter Werte überprüfen. Dazu werden Komperatoren, hard- oder softwaremäßig verwendet. Weiterhin weisen die Halbleiterbausteine IC1 und IC2 eine Reset-Funktion R1 und R2 auf, die von den Halbleiterbausteinen IC1 und IC2 dann aktiviert wird, wenn die Versorgungsspannungen nicht innerhalb vorgegebener Parameter liegen. Dann können die anderen Komponenten des Steuergeräts resitiert werden, um sie in einen definierten Zustand zu bringen.

Diese Reset-Funktionen R1 und R2 sind direkt oder über eine Logik zusammengeführt und mit allen Komponenten des Steuergeräts verbunden, um einen Reset zu aktivieren, wenn die Versorgungsspannungen nicht innerhalb vorgegebener Parameter sind beziehungsweise den Reset freizugeben, wenn die Versorgungsspannungen korrekt sind. Die Freigabe erfolgt nach Power-up, um den Betrieb des Steuergeräts SG zu ermöglichen.

Die Zündkreisschaltung FLIC weist elektrisch steuerbare Leistungsschalter auf, die in Abhängigkeit von den Signalen des Mikrocontrollers µC und weiterer relevanter Signale angesteuert werden. Üblicherweise werden pro Zündkreis zwei Leistungsschalter verwendet, es ist jedoch möglich, mehr als diese zwei Leistungsschalter einzusetzen. Wichtig ist die redundante Auswertung durch den Mikrocontroller µC und den Halbleiterbaustein IC1.

Figur 2 zeigt ein Blockschaltbild von drei erfindungsgemäß zusammen geschalteten Halbleiterbausteinen ASIC A, B und C. Die drei ASICs A, B und C stellen mehrere Versorgungsspannungen bereit. Eine dieser Spannungen ist die VST33, die 3,3V für die Eigenversorgung der Halbleiterbausteine und aller anderen Systemkomponenten bereitstellt. Zur Eigenversorgung der ASICs A, B und C wird ihnen die Spannung VST33 nach einer möglichen Filterung (über externe Bauteile) als AVST33 (Versorgung der analogen Schaltungsteile) und DVST33 (Digital-Versorgung) zurückgegeben. Sowohl die Ausgangsspannung VST33 als auch die Eingangsspannungen AVST33 und DVST33 werden im ASIC-eigenen Resetgenerator überwacht. Um eine gegenseitige Überwachung der ASICs zu ermöglichen, erfolgt die AVST33- und DVST33-Versorgung in kaskadierter (teilweise oder komplett) Form. An die Eingänge AVST33 und DVST33 von ASIC A wird das Ausgangssignal VST33 des ASIC C geführt. Das Ausgangssignal des ASIC A VST33 geht entsprechend an die Eingänge AVST33 und DVST33 des ASIC B. Das Ausgangssignal des ASICs B geht dann wiederum an die beiden Eingänge des ASICs C. In den Blöcken 209, 210 und 211 der Reset-Generatoren 202, 203 und 205 werden die Signale miteinander verknüpft und ausgewertet. In Abhängigkeit davon wird die Stromquelle ausgewählt, mit der der Reset-Strom ausgegeben wird. Für die Reset-Entscheidung werden zusätzlich noch weitere ASIC-interne Signale verwendet.

Die Auswertung in den Blöcken 209, 210 und 211 geschieht durch Komparatoren. Ist mindestens eine der Spannungen nicht in Ordnung, wird die Pull-Down-Stromquelle I_PD, so ist sie in allen drei Reset-Generatoren 202, 203 und 205 gekennzeichnet, ausgewählt. Sind die Spannungen in Ordnung, wird die obere Pull-Up-Quelle I_PU gewählt. Der Strom der Stromquelle I_PU sorgt dafür, dass das Reset freigegeben wird. Dafür weist er beispielsweise 1 mA auf. Der Strom der Stromquelle I_PD sorgt dafür, dass die Reset-Funktion über die Ausgänge 206, 207 und 208 aktiviert wird. Sobald einer der ASICs A, B und C den Strom der jeweiligen Stromquelle I_PD liefert, dann kommt es zur Resetierung der Komponenten im Steuergerät beziehungsweise der entsprechenden Reaktion abhängig vom Vorhandensein und Art des Logikblockes 212. Liefern alle ASICs A, B und C den Strom der jeweiligen Stromquelle I_PU, dann kommt es zu einer Freigabe des Resets. Durch die Pfeile 200, 201, 204 ist die gegenseitige Überwachung dargestellt.

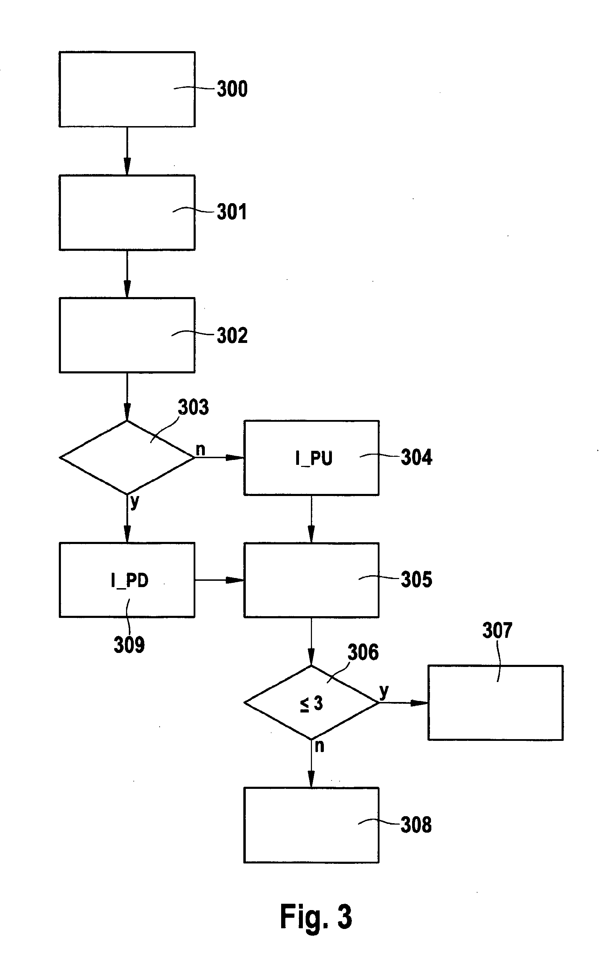

Figur 3 zeigt in einem Flussdiagramm das erfindungsgemäße Verfahren. In Verfahrensschritt 300 werden die Versorgungsspannungen aus der Batteriespannung durch die Halbleiterbausteine ASIC A, B und C erzeugt. In Verfahrensschritt 301 erfolgt die Überwachung der eigenen Versorgungsspannungen durch Komperatoren und in Verfahrensschritt 302 das Überwachen des fremden Linearreglers, das heißt der Ausgangsspannung eines der anderen ASICs, wie in Figur 2 dargestellt. In Verfahrensschritt 303 wird geprüft, ob nur eine der Versorgungsspannungen nicht in Ordnung ist. Ist das der Fall, dann wird zumindest von einem ASIC der Strom I_PD im Verfahrensschritt 309 gewählt und in Verfahrensschritt 305 anderen Strömen hinzuaddiert, die die anderen ASICs ausgeben. Hat sich jedoch in Verfahrensschritt 303 herausgestellt, dass die Spannungen in Ordnung sind, dann wird in Verfahrensschritt 304 der Strom der jeweiligen Stromquelle I_PD gewählt. In Verfahrensschritt 305 werden die Ströme der einzelnen Halbleiterbausteine, beispielsweise gemäß Figur 2, aufsummiert, um dann in Verfahrensschritt 306 geprüft zu werden, ob sie unterhalb einer bestimmten Grenze sind. Diese Grenze liegt im Normalfall bei 0mA, d.h. positive Ströme bedeuten immer einen Strom, der vom ASIC aus 3,3V (PU) geliefert wird, d.h. eine Resetfreigabe folgt. Negative Ströme bedeuten Ströme, die in den ASIC hinein nach Masse GND (PD) fleißen, d.h. eine Reset-Aktivierung folgt. st das der Fall, dass die Summe der Ströme unterhalb der Grenze ist, dann wird in Verfahrensschritt 307 der Reset der Komponenten im Steuergerät vorgenommen. Ist das nicht der Fall, endet das Verfahren in Verfahrensschritt 308.

## Patentansprüche

1. Steuergerät (SG) zur Ansteuerung von Personenschutzmitteln für ein Fahrzeug (FZ) mit wenigstens zwei Halbleiterbausteinen (ASIC A bis C), die die Ansteuerung der Personenschutzmittel bewirken, wobei die wenigstens zwei Halbleiterbausteine (ASIC A bis C) jeweils Versorgungsspannungen (VST 33) für das Steuergerät (SG) bereitstellen, dass die wenigstens zwei Halbleiterbausteine (ASIC A bis C) jeweils eine Überwachungsfunktion für die Versorgungsspannungen (VST 33) aufweisen, **dadurch gekennzeichnet, dass** die wenigstens zwei Halbleiterbausteine (ASIC A-C) mittels der jeweiligen Überwachungsfunktion sich gegenseitig zusätzlich bezüglich der Versorgungsspannungen überwachen, dass die wenigstens zwei Halbleiterbausteine eine gemeinsame Reset-Funktion für das Steuergerät (SG) aufweisen, die in Abhängigkeit von Ausgangssignalen der Überwachungsfunktion aktiviert wird.

2. Steuergerät nach Anspruch 1, **dadurch gekennzeichnet, dass** die jeweilige Überwachungsfunktion wenigstens einen Linearregler des anderen Halbleiterbausteins bezüglich der Versorgungsspannungen überwacht.

3. Steuergerät nach Anspruch 1 oder 2, **dadurch gekennzeichnet, dass** die Reset-Funktion wenigstens eine Stromquelle zur Abgabe von wenigstens zwei Strömen aufweist.

4. Steuergerät nach Anspruch 3, **dadurch gekennzeichnet, dass** die wenigstens zwei Ströme sich mindestens um den Faktor 2 unterscheiden, wobei ein erster Strom zur Aktivierung des Resets höher als ein zweiter Strom zur Freigabe des Resets ist.

5. Steuergerät nach Anspruch 4, **dadurch gekennzeichnet, dass** der erste Strom 2 mA und der zweite Strom 1 mA ist.

6. Verfahren zur Ansteuerung von Personenschutzmitteln (PS) für ein Fahrzeug (FZ) mit wenigstens zwei Halbleiterbausteinen (ASIC A bis C), die die Ansteuerung bewirken, wobei die wenigstens zwei Halbleiterbausteine (ASIC A bis C) jeweils Versorgungsspannungen für das Steuergerät (SG) bereitstellen, dass die wenigstens zwei Halbleiterbausteine (ASIC A bis C) jeweils die Versorgungsspannungen überwachen, **dadurch gekennzeichnet, dass** zusätzlich die wenigstens zwei Halbleiterbausteine (ASIC A bis C) sich gegenseitig bezüglich der Versorgungsspannug überwachen, dass durch die wenigstens zwei Halbleiterbausteine (ASIC A bis C) gemeinsam ein Reset für das Steuergerät (SG) in Abhängigkeit von der Überwachung der Versorgungsspannungen durchgeführt wird.

7. Verfahren nach Anspruch 6, **dadurch gekennzeichnet, dass** die wenigstens zwei Halbleiterbausteine (ASIC A bis C) sich bezüglich der Versorgungsspannungen dadurch überwachen, dass wenigstens ein Linearregler des jeweils anderen Halbleiterbausteins überwacht wird.

8. Verfahren nach Anspruch 6 oder 7, **dadurch gekennzeichnet, dass** für das Reset wenigstens eine Stromquelle wenigstens zwei Ströme bereitstellt.

9. Verfahren nach einem der Ansprüche 6 bis 8, **dadurch gekennzeichnet, dass** die wenigstens 2 Ströme sich um den Faktor 2 unterscheiden, wobei ein erster Strom zu Sperrung des Resets höher als ein zweiter Strom zur Freigabe des Resets ausgelegt wird.

10. Verfahren nach Anspruch 9, **dadurch gekennzeichnet, dass** als der erste Strom 2 mA und als der zweite Strom 1 mA verwendet werden.

## Claims

1. Control unit (SG) for actuating personal protection means for a vehicle (FZ) comprising at least two semiconductor components (ASIC A to C) which bring about the actuation of the personal protection means, wherein the at least two semiconductor components (ASIC A to C) in each case provide supply voltages (VST 33) for the control unit (SG), wherein the at least two semiconductor components (ASIC A to C) in each case have a monitoring function for the supply voltages (VST 33), **characterized in that** the at least two semiconductor components (ASIC A to C), by means of the respective monitoring function, mutually additionally monitor one another with regard to the supply voltages, **in that** the at least two semiconductor components have a common reset function for the control unit (SG), said function being activated depending on output signals of the monitoring function.

2. Control unit according to Claim 1, **characterized in that** the respective monitoring function monitors at least one linear controller of the other semiconductor component with regard to the supply voltages.

3. Control unit according to Claim 1 or 2, **characterized in that** the reset function has at least one current source for outputting at least two currents.

4. Control unit according to Claim 3, **characterized in that** the at least two currents differ at least by the factor 2, wherein a first current for activating the reset is higher than a second current for enabling the reset.

5. Control unit according to Claim 4, **characterized in that** the first current is 2 mA and the second current is 1 mA.

6. Method for actuating personal protection means (PS) for a vehicle (FZ) comprising at least two semiconductor components (ASIC A to C) which bring about the actuation, wherein the at least two semiconductor components (ASIC A to C) in each case provide supply voltages for the control unit (SG), wherein the at least two semiconductor components (ASIC A to C) in each case monitor the supply voltages, **characterized in that** additionally the at least two semiconductor components (ASIC A to C) mutually monitor one another with regard to the supply voltage, **in that** the at least two semiconductor components (ASIC A to C) jointly carry out a reset for the control unit (SG) depending on the monitoring of the supply voltages.

7. Method according to Claim 6, **characterized in that** the at least two semiconductor components (ASIC A to C) monitor one another with regard to the supply voltages by virtue of the fact that at least one linear controller of the respective other semiconductor component is monitored.

8. Method according to Claim 6 or 7, **characterized in that** for the reset at least one current source provides at least two currents.

9. Method according to any of Claims 6 to 8, **characterized in that** the at least two currents differ by the factor 2, wherein a first current for disabling the reset is designed to be higher than a second current for enabling the reset.

10. Method according to Claim 9, **characterized in that** 2 mA is used as the first current and 1 mA is used as the second current.

## Revendications

1. Contrôleur (SG) pour commander des moyens de protection personnelle pour un véhicule (FZ) comprenant au moins deux composants semiconducteurs (ASIC A à C) qui réalisent la commande des moyens de protection personnelle, les au moins deux composants semiconducteurs (ASIC A à C) délivrant respectivement des tensions d'alimentation (VST 33) pour le contrôleur (SG), les au moins deux composants semiconducteurs (ASIC A à C) présentant respectivement une fonction de surveillance pour les tensions d'alimentation (VST 33), **caractérisé en ce que** les au moins deux composants semiconducteurs (ASIC A à C) se surveillent en plus mutuellement concernant les tensions d'alimentation au moyen de la fonction de surveillance correspondante, **en ce que** les au moins deux composants semiconducteurs présentent une fonction de réinitialisation commune pour le contrôleur (SG), laquelle est activée en fonction de signaux de sortie de la fonction de surveillance.

2. Contrôleur selon la revendication 1, **caractérisé en ce que** la fonction de surveillance correspondante surveille au moins un régulateur linéaire de l'autre composant semiconducteur concernant les tensions d'alimentation.

3. Contrôleur selon l'une des revendications 1 ou 2, **caractérisé en ce que** la fonction de réinitialisation présente au moins une source de courant pour délivrer au moins deux courants.

4. Contrôleur selon la revendication 3, **caractérisé en ce que** les au moins deux courants se différentient au moins du facteur 2, un premier courant destiné à activer la réinitialisation étant supérieur à un deuxième courant destiné à libérer la réinitialisation.

5. Contrôleur selon la revendication 4, **caractérisé en ce que** le premier courant est égal à 2 mA et le deuxième courant égal à 1 mA.

6. Procédé pour commander des moyens de protection personnelle (PS) pour un véhicule (FZ) comprenant au moins deux composants semiconducteurs (ASIC A à C) qui réalisent la commande, les au moins deux composants semiconducteurs (ASIC A à C) délivrant respectivement des tensions d'alimentation pour le contrôleur (SG), les au moins deux composants semiconducteurs (ASIC A à C) surveillant respectivement les tensions d'alimentation, **caractérisé en ce que** les au moins deux composants semiconducteurs (ASIC A à C) se surveillent en plus mutuellement concernant la tension d'alimentation, **en ce qu'**une réinitialisation pour le contrôleur (SG) est exécutée en commun par les au moins deux composants semiconducteurs (ASIC A à C) en fonction de la surveillance des tensions d'alimentation.

7. Procédé selon la revendication 6, **caractérisé en ce que** les au moins deux composants semiconducteurs (ASIC A à C) se surveillent concernant les tensions d'alimentation **en ce qu'**au moins un régulateur linéaire de l'autre composant semiconducteur respectif est surveillé.

8. Procédé selon la revendication 6 ou 7, **caractérisé en ce qu'**au moins une source de courant délivre au moins deux courants pour la réinitialisation.

9. Procédé selon l'une des revendications 6 à 8, **caractérisé en ce que** les au moins deux courants se différentient du facteur 2, un premier courant destiné à bloquer la réinitialisation étant supérieur à un deuxième courant destiné à libérer la réinitialisation.

10. Procédé selon la revendication 9, **caractérisé en ce que** 2 mA sont utilisés comme premier courant et 1 mA comme deuxième courant.
